# EUROPEAN PATENT SPECIFICATION

(11) **EP 4 028 927 B1**
(45) Date of publication and mention of the grant of the patent: **29.05.2024**
(21) Application number: 20736845.7
(22) Date of filing: 17.06.2020
(51) Int. Cl.: G06F 21/75, G06F 21/55

(54) **HYBRID MITIGATION OF SPECULATION BASED ATTACKS BASED ON PROGRAM BEHAVIOR**
HYBRIDE EINDÄMMUNG VON ANGRIFFEN AUF SPEKULATIONSBASIS BASIEREND AUF PROGRAMMVERHALTEN
ATTÉNUATION HYBRIDE D'ATTAQUES FONDÉES SUR UNE SPÉCULATION ET REPOSANT SUR LE COMPORTEMENT D'UN PROGRAMME

(30) Priority: 12.09.2019 US 201962899549 P; 12.11.2019 US 201916681642
(43) Date of publication of application: 20.07.2022
(73) Proprietor: Microsoft Technology Licensing, LLC, Redmond, WA 98052-6399 (US)
(72) Inventor: SAILESHWAR, Gururaj, Redmond, Washington 98052-6399 (US); CHOWDHURY, Muntaquim, Redmond, Washington 98052-6399 (US)
(74) Representative: CMS Cameron McKenna Nabarro Olswang LLP
(86) International application number: PCT/US2020/038021
(87) International publication number: WO 2021/050135

(56) References cited:
- US-A1- 2019 147 162
- LI CONGMIAO ET AL: "Online Detection of Spectre Attacks Using Microarchitectural Traces from Performance Counters", 2018 30TH INTERNATIONAL SYMPOSIUM ON COMPUTER ARCHITECTURE AND HIGH PERFORMANCE COMPUTING (SBAC-PAD), IEEE, 24 September 2018 (2018-09-24), pages 25-28, XP033521311, DOI: 10.1109/CAHPC.2018.8645918 [retrieved on 2019-02-20]
- ESMAEIL MOHAMMADIAN KORUYEH ET AL: "SPECCFI: Mitigating Spectre Attacks using CFI Informed Speculation", ARXIV.ORG, CORNELL UNIVERSITY LIBRARY, 201 OLIN LIBRARY CORNELL UNIVERSITY ITHACA, NY 14853, 4 June 2019 (2019-06-04), XP081545327,
- KOCHER PAUL ET AL: "Spectre Attacks: Exploiting Speculative Execution", 2019 IEEE SYMPOSIUM ON SECURITY AND PRIVACY (SP), IEEE, 19 May 2019 (2019-05-19), pages 1-19, XP033617088, DOI: 10.1109/SP.2019.00002 [retrieved on 2019-09-12]

## Description

### BACKGROUND

Attacks like Spectre and Meltdown exploit vulnerabilities in processors resulting from side effects of speculative execution. These vulnerabilities affect hundreds of millions of computers in data centers, mobile devices, laptops, and other computers. These attacks can leak sensitive data by exploiting processor speculation to access secrets and transmitting them through speculative changes to the processor caches. Such attacks are extremely potent, having broken software-based abstractions of trust like process-isolation, intra-process sandboxing and even trusted hardware-enclaves (e.g., Intel SGX). Thus, there is ample opportunity for improvement in techniques to mitigate these attacks. US2019147162A1 describes methods, apparatus, systems and articles of manufacture to identify a side-channel attack.
LI CONGMIAO ET AL: "Online Detection of Spectre Attacks Using Microarchitectural Traces from Performance Counters", 2018 30th International Symposium on Computer Architecture and High Performance Computing, 24 September 2018 describes monitoring microarchitectural events such as cache misses, branch mispredictions from existing CPU performance counters to detect Spectre during attack runtime. Our detector was able to achieve 0% false negatives with less than 1 % false positives using various machine learning classifiers with a reasonable performance overhead.
ESMAEIL MOHAMMADIAN KORUYEH ET AL: "SPECCFI: Mitigating Spectre Attacks using CFI Informed Speculation", 4 June 2019 describes a precise speculation-aware hardware stack to constrain speculation on backward control-flow edges (returns). KOCHER PAUL ET AL: "Spectre Attacks: Exploiting Speculative Execution", 2019 IEEE Symposium on Security and Privacy, 19 May 2019 describes practical attacks that combine methodology from side channel attacks, fault attacks, and return-oriented programming that can read arbitrary memory from the victim's process.

### SUMMARY

The invention is set out in the appended set of claims.

Apparatus and methods are disclosed for mitigating speculation-based attacks in processors. In one example of the disclosed technology, a method of operating a processor includes profiling stream of instructions for at least one performance criteria and based on the performance criteria, selecting one of a plurality of mitigation schemes for a speculation-based attack; wherein the selecting is performed by: measuring the at least one performance criteria when a first one of the mitigation schemes is used when operating the processor; measuring the at least one performance criteria when a second, different one of the mitigation schemes is used when operating the processor; and comparing measurements for the at least one performance criteria when a first one of the mitigation schemes is used when operating the processor to measurements for the at least one performance criteria when a second one of the mitigation schemes is used when operating the processor.

The selected mitigation scheme is chosen in order to improve performance of the processor while implementing measures to mitigate side effect attacks. In some examples, a plurality of mitigation schemes for cache side effect attacks include at least one of a delay mechanism, a redo mechanism, and an undue mechanism. As an example, based on performance criteria for branch prediction or cache misses, one of the plurality of mitigation schemes is selected that offers desirable performance based on behavior of recently-executed instructions in the instruction stream.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The foregoing and other aspects and features of the disclosed technology will become more apparent from the following detailed description, which proceeds with reference to the accompanying figures.

### BRIEF DESCRIPTION OF THE DRAWINGS

FIG. 1 illustrates an example computing system in which certain methods of profiling and mitigating speculation-based attacks can be performed.
FIG. 2 illustrates a multicore computing system in which certain examples of profiling and mitigating speculation-based attacks can be performed.
FIG. 3 illustrates an example of remediating a potential side channel cache attack, as can be performed in certain examples of the disclosed technology.
FIG. 4 illustrates an example of profiling and mitigating speculation-based attacks, as can be implemented in certain examples of the disclosed technology.
FIG. 5 illustrates an example microarchitecture using a profiler, as can be implemented in certain examples of the disclosed technology.
FIG. 6 is a chart illustrating a table of mitigation schemes that can be selected based on cache miss rates and misprediction frequency, as can be implanted in certain examples of the disclosed technology.
FIG. 7 illustrates an example implementation of a speculation source tracking and remediation unit in a processor, as can be implemented in certain examples of the disclosed technology.
FIG. 8 illustrates an example of a speculation shadow buffer, as can be implemented in certain examples of the disclosed technology.
FIG. 9 illustrates an example of a taint matrix, as can be implemented in certain examples of the disclosed technology.
FIG. 10 is a flowchart outlining an example method of selecting a mitigation scheme using a profiler, as can be performed in certain examples of the disclosed technology.
FIG. 11 is a diagram illustrating an example computing environment in which the disclosed methods and apparatus can be implemented.

### DETAILED DESCRIPTION

### I. General Considerations

This disclosure is set forth in the context of representative embodiments that are not intended to be limiting in any way.

As used in this application the singular forms "a," "an," and "the" include the plural forms unless the context clearly dictates otherwise. Additionally, the term "includes" means "comprises." Further, the term "coupled" encompasses mechanical, electrical, magnetic, optical, as well as other practical ways of coupling or linking items together, and does not exclude the presence of intermediate elements between the coupled items. Furthermore, as used herein, the term "and/or" means any one item or combination of items in the phrase.

The systems, methods, and apparatus described herein should not be construed as being limiting in any way. Instead, this disclosure is directed toward all novel and non-obvious features and aspects of the various disclosed embodiments, alone and in various combinations and subcombinations with one another. The disclosed systems, methods, and apparatus are not limited to any specific aspect or feature or combinations thereof, nor do the disclosed things and methods require that any one or more specific advantages be present or problems be solved. Furthermore, any features or aspects of the disclosed embodiments can be used in various combinations and subcombinations with one another.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed things and methods can be used in conjunction with other things and methods. Additionally, the description sometimes uses terms like "produce," "generate," "display," "receive," "verify," "execute," "perform," "convert," "suppress," "mitigate," and "initiate" to describe the disclosed methods. These terms are high-level descriptions of the actual operations that are performed. The actual operations that correspond to these terms will vary depending on the particular implementation and are readily discernible by one of ordinary skill in the art having the benefit of the present disclosure.

Theories of operation, scientific principles, or other theoretical descriptions presented herein in reference to the apparatus or methods of this disclosure have been provided for the purposes of better understanding and are not intended to be limiting in scope. The apparatus and methods in the appended claims are not limited to those apparatus and methods that function in the manner described by such theories of operation.

Any of the disclosed methods can be implemented as computer-executable instructions stored on one or more computer-readable media (*e*.*g*., computer-readable media, such as one or more optical media discs, volatile memory components (such as DRAM or SRAM), or nonvolatile memory components (such as hard drives)) and executed on a computer (*e*.*g*., any commercially available computer, including smart phones or other mobile devices that include computing hardware). Any of the computer-executable instructions for implementing the disclosed techniques, as well as any data created and used during implementation of the disclosed embodiments, can be stored on one or more computer-readable media (*e*.*g*., computer-readable storage media). The computer-executable instructions can be part of, for example, a dedicated software application or a software application that is accessed or downloaded via a web browser or other software application (such as a remote computing application). Such software can be executed, for example, on a single local computer or in a network environment (*e*.*g*., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, Java, or any other suitable programming language. Certain details of suitable computers and hardware are well-known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

### II. Introduction to the Disclosed Technology

Speculative execution is used in many modern processors to avoid control flow or data dependency stalls. However, in the event of mis-speculation, illegal access to secret data may be transiently allowed. Side channel attacks, for example, based on latency differences of cache hits or misses, may leak data to an attacker. Apparatus and methods disclosed herein can be used to address such speculative side channel attacks by identifying sources of speculation, monitoring speculative execution, and remediating side effects of speculative execution until a speculation-source operation associated with the speculative execution is resolved. However, unlike mitigation approaches that try to prevent all speculative modifications to processor state, such that upon mis-speculation no changes have occurred that can leak information, disclosed examples can use a selected scheme from a number of different schemes that reduce performance in some but not all use cases.

In some examples, a number of different schemes can be used to prevent speculative modifications to processor cache such that mis-speculation will not cause changes that can leak private information. Three such schemes include: a delay scheme, where a speculative load instruction is delayed until a speculation-source operation is resolved and associated speculative load becomes non-speculative; a redo scheme where cache hits are allowed to proceed without delay but all speculative cache misses are blocked and then re-performed once the associated load instruction becomes non-speculative; and an undo scheme where speculative changes are allowed to be made to the cache, but these changes are undone if, when the speculation source operation resolves, it is determined to be mis-speculated. In certain examples, a speculation shadow buffer and/or taint matrix can be one of the selected mitigation schemes, in addition to the unto, redo, and delay schemes. In some examples, the profiler can be used to select between one or more schemes, where at least one of the schemes is implemented using two different parameters. For example, one selectable delay scheme can cause the processor to delay issue or execution of a speculative load, while a second selectable delay scheme can cause the processor to execute, but delay writeback or commit of the speculative load. Using a profiler, attributes of processor workloads such as cache hit or miss rates, and/or branch mis-prediction rates, can be used to dynamically select one of the plurality of schemes that is more likely to be suitable for the current workload.

As used herein, the term "speculation-source operation" refers to an operation that speculation can be based on. For example, branch instructions introduce a control flow conditional and taint-source operation, based on whether the branch is taken or not taken, can proceed prior to the speculation-source operation being resolved (*e*.*g*., whether the branch is taken or the branch location) is resolved. As another example, store address calculation is an example of a speculation-source operation (as used in this application) because taint-source operation may proceed prior to the calculation of the store address.

For ease of explanation, the examples disclosed herein mostly focus on control flow speculation that is used to bypass existing protection mechanism to access secret data, install the data in the cache, and subsequently leak the data using cache side-channels. However, as will be readily understood to one of ordinary skill in the relevant art having the benefit of the present disclosure, the disclosed techniques can be applied to number of different speculation sources and side channel attacks. Examples of sources of speculation that can be addressed using disclosed methods and apparatus include control flow speculation, data flow speculation, memory consistency, and exception checking. Examples of side channels that can be remediated from attack based on such speculation sources can include side channel leakage involving data cache, multithreaded port attacks, translation lookaside buffer (TLB) lookups, instruction cache, use of vector instructions, and branch target buffer attacks. As used herein, the term "operation" refers to not only architecturally-visible instructions (macro instructions) but can also include processor micro instructions, microcode, or other forms of operations performed by a processor.

### III. Example Computer System

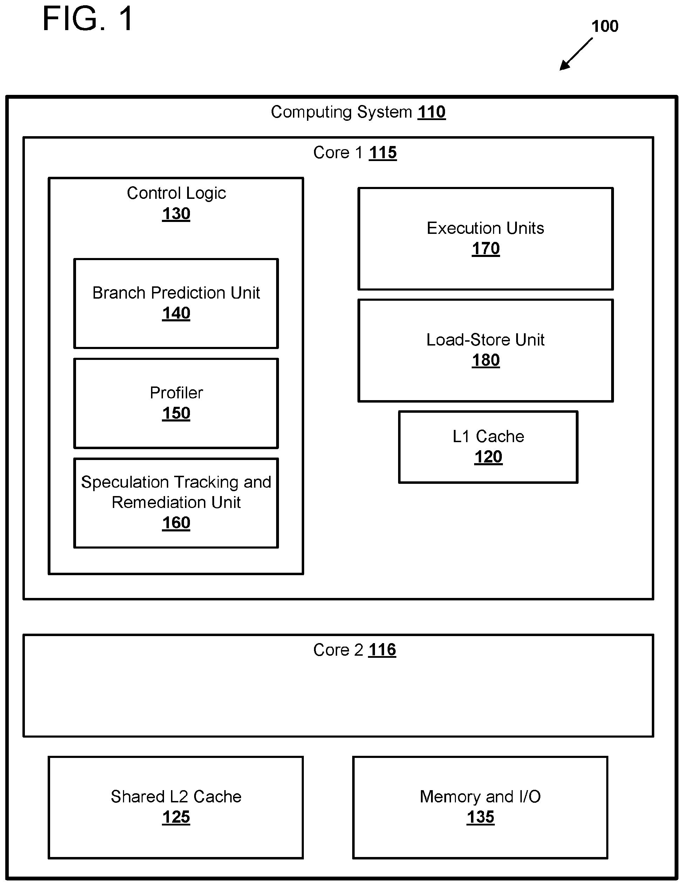

FIG. 1 is a block diagram 100 of an example computing system 110 in which certain examples of the disclosed technology can be implemented. The computing system 110 includes a processor having two processor cores 115 and 116 along with an L1 cache 120, a shared L2 cache 125, and a memory and input/output unit 135. Further detail is illustrated for the first core 115; the second core 116 can have similar features. As shown, the first core 115 includes control logic 130 which includes a branch prediction unit 140, a profiler 150, and a speculation remediation unit 160. The control logic 130 controls operation of the execution units 170 and the processor core's load-store unit 180. The execution units 140 can include integer units, arithmetic and logic units, floating-point units, vector processing units, and other suitable data processing execution units. The load-store unit 180 can include logic circuitry that sequences memory load and store operations, controls the L1 cache, and implements other control logic relating to core memory operations. The control logic 130 includes an instruction scheduler that controls dispatch and issue of processor instructions to the execution units 170. The control logic 130 is also coupled to a speculation tracking and remediation unit 160.

The computing system 110 and processor, including processor cores 115 and 116, can be implemented using any suitable computing hardware. For example, the computing system and/or processor can implemented with general-purpose CPUs and/or specialized processors, such as graphics processing units (GPUs) or tensor processing units (TPUs); application-specific integrated circuits (ASICs), or programmable/reconfigurable logic, such as field programmable gate arrays (FPGAs) executing on any suitable commercially-available computer), or any suitable combination of such hardware. In some examples, the processor can be implemented as a virtual processor executing on a physical processor under control of a hypervisor. In some examples, the processor can be implemented using hardware or software emulation to execute at least some instructions formatted in a different instruction set architecture than the native instruction set of the host processor providing instruction emulation.

Any suitable technology can be used to implement the control logic 130 and its subcomponents, including the branch prediction unit 140, the profiler 150, and the speculation tracking and remediation unit 160. The control logic 130 can be configured to regulate one or more aspects of processor control, including regulating execution of processor instructions through various stages of execution (*e.g*., fetch, decode, dispatch, issue, execution, writeback, and commit), controlling operation of datapath, execution units, and memory. The control logic 130 can regulate not only architecturally-visible operations, but also can regulate microarchitectural operations that are typically not intended to be programmer-visible, including speculative execution (*e.g*., of conditional branches, memory loads, or memory address calculations) out of order issue, register allocation and renaming, superscalar operation, translation of macro instructions into micro instructions, fusion of macro or micro operations, cache and memory access, branch prediction, address generation, store forwarding, instruction reordering, and any other suitable microarchitectural operation.

The control logic 130 may be implemented with "hardwired logic," such as a finite state machine implemented with a combination of combinatorial and sequential logic gates (*e.g*., in a random logic design style implemented as a Moore or Mealy machine) or as programmable logic (*e.g*., a programmable logic array or other reconfigurable logic); or as a microprogrammed controller or microcode processor that executes microinstructions stored in a microcode memory (implemented as volatile memory (*e.g*., registers, static random access memory (SRAM), dynamic random access memory DRAM), non-volatile memory (*e.g*., read only memory (ROM), programmable read only memory (PROM), electrically erasable programmable memory (EEPROM), flash memory, *etc*.), or some combination of volatile and non-volatile memory types. The control logic 130 generally operates by accepting input signals (*e.g.*, by receiving at least one digital value), processing the input signals taking into account a current state sequential elements of the control logic, and producing output signals (*e.g*., by producing at least one digital value) that are used to control other components of the processor, for example, logic components, datapath components, execution units, memories, and/or input/output (I/O) components. The current state of the control logic is updated to a new state based on input signals and current state. Values representing the state of the control logic can be store in any suitable storage device or memory, including latches, flip-flops, registers, register files, memory, *etc.* In some examples, the control logic is regulated by one or more clock signals that allow for processing of logic values synchronously, according to a clock signal edge or signal level. In other examples, at least a portion of the control logic can operate asynchronously.

The term "conditional branch" refers to a branch that is taken or not taken based on a conditional value. For example, in some instruction set architectures, another instruction is used to generate a Boolean value by comparing or testing two data (*e.g*., greater than, greater than or equal, less than, less than or equal, equal, *etc.*)*.* The specific branch instruction may take a branch to a new program counter location, depending on the Boolean value. If the branch is not taken, the program counter is incremented (or decremented) and the next instruction in memory is executed. In some examples, the branch instruction can be predicated on a value generated by another instruction. In some examples, an absolute branch (an instruction that does not specify a conditional, and so will always branch when executed) may be conditional if it is dependent on a speculation source produced by another instruction; for example; a memory address calculation.

The speculation tracking and remediation unit 160 acts in concert with the control logic 130 in order to identify sources of speculative execution in the processor, track instructions that access processor resources in a speculative fashion based on associated sources of speculative execution, and remedy side effects of such speculative execution in order to reduce or eliminate risk of side channel attacks induced by speculative execution. In particular, the speculation tracking and remediation unit 160 can associate speculation sources with side-effect causing operations like memory loads and use these associations in order to selectively remediate side effects of associated operations, and without forcing entire classes of operations to be delayed or otherwise affected by remediation measures. The speculation tracking and remediation unit 160 uses a mitigation scheme selected from a plurality of schemes based on at least one performance metric for instructions being executed by the core 115. The speculation tracking and remediation unit 160 and its subcomponents 170, 180, and 190 can be implemented using similar hardware components as the control logic 130, as described above. In some examples, some or all of the hardware components used to implement the control logic are shared or overlap with the hardware components used to implement the speculation tracking and remediation unit 160, while in other examples, separate hardware components may be used.

In further detail, the speculation tracking and remediation unit 160 can identify and monitor one or more of a number of different types of operations, including, for example: a control flow operation, a data flow operation, a branch operation, a predicated operation, a memory store address calculation, a memory consistency operation, a compound atomic operation, a flag control operation, a transactional operation, or an exception operation. Specific examples of control flow operations include branch instructions such as relatively-addressed branches and absolute addressed jump instructions. Branches may be conditional, or non-conditional (always taken or always not taken). In some cases, non-conditional branches may have a speculation source, for example, when the branch instruction is waiting on an address calculation. The behavior of even non-conditional branches may be data dependent, for example, in the case of a branch to an illegal address or protected location. As another example, memory address calculation operations, for example calculation of memory addresses for memory store instructions are another example of a speculation source that can be tracked by the speculation tracking and remediation unit 160. In some examples, a speculation shadow buffer can be used to track sources of speculation.

The speculation tracking and remediation unit 160 can identify processor operations that can be at least partially executed in a speculative fashion based on an identified speculation the source. For example, memory operations such as those performed when executing memory load or memory store instructions can be speculatively executed before a speculation-source operation identified by the speculation tracking and remediation unit 160 have completed. A specific example of a side-effect causing operation is a memory array read operation. Other examples of types of side-effect causing operation that can be performed prior to resolving a speculation source include: a memory load operation, a memory store operation, a memory array read operation, a memory array write operation, a memory store forwarding operation, a memory load forwarding operation, a branch instruction (including relatively addressed or absolutely addressed control flow changes), a predicated instruction, an implied addressing mode operation, an immediate addressing mode operation, a register addressing mode memory operation, an indirect register addressing mode operation, an automatically indexed (e.g., an automatically incremented or decremented addressing mode operation), a direct addressing mode operation, an indirect addressing mode operation, an indexed addressing mode operation, a register based indexed addressing mode operation, a program counter relative addressing mode operation, or a base register addressing mode operation. In some examples, a taint matrix is used to track taint-source operations.

The speculation tracking and remediation unit 160 acts to remedy undesired side effects of speculative execution. For example, access to the L2 cache 125 can be modified during speculative execution such that all cache misses are blocked (delay scheme), all cache misses are re-performed (redo scheme), or cache misses are undone (undo scheme). A specific example of remediation that can occur in a delay scheme is delaying dispatch or issue of instructions affected by speculative execution. However, the types of remediation are not limited to delay of dispatch or issue. For example, a remediated instruction may be delayed at another stage in the process or pipeline, for example, earlier, at the fetch or dispatch stage, or later, at the execution, write back, or commit stage. Examples of processor components that can be remediated by a particular speculative state change remediation unit 160 include: a data cache of the processor, an instruction cache of the processor, a register read port of the processor, a register write port of the processor, a memory load port of the processor, a memory store port of the processor, symmetric multi-threading logic of the processor, a translation lookaside buffer of the processor, a vector processing unit of the processor, a branch target history table of the processor, or a branch target buffer of the processor.

### IV. Example Computing System

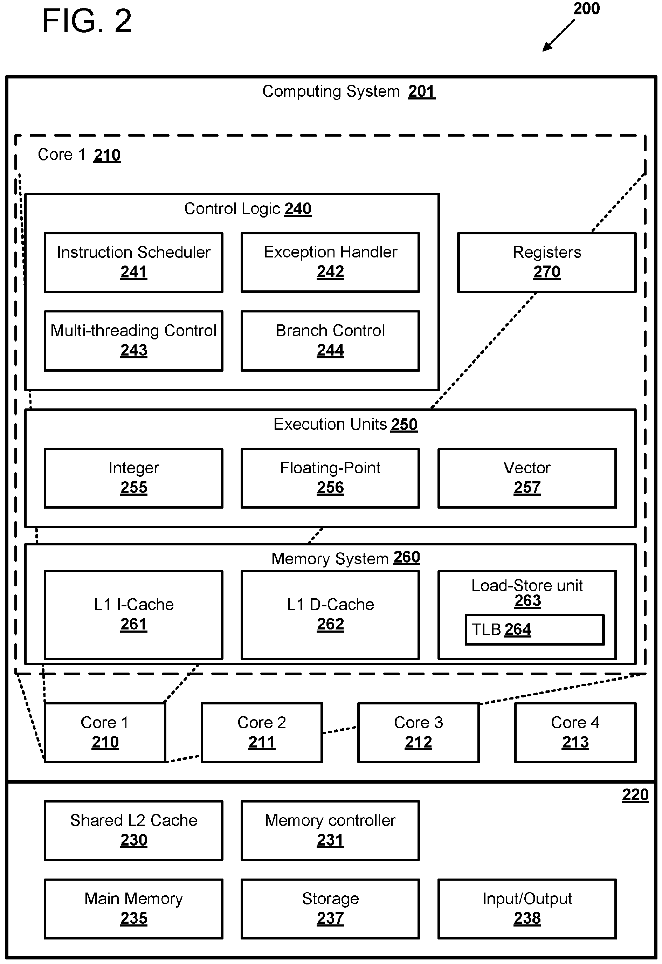

FIG. 2 is a block diagram 200 outlining an example computing system 201 in which certain examples of the disclosed technology can be implemented. In the illustrated computing system 201, a processor including four cores 210, 211, 212, and 213 is illustrated. Each of the cores 211-213 can communicate with each other as well as with a shared logic portion 220. This shared logic system 220 includes shared level two (L2) cache 230, a memory controller 231, main memory 235, storage 237, and input/output 238. The shared L2 cache 230 stores data accessed from the main memory 235 and can be accessed by L1 cache in each of the four cores 210-213. The memory controller 231 controls the flow of data between the shared cache 230 and the main memory 235. Additional forms of storage such as hard drive or flash memory can be used to implement the storage 237. The input/output 238 can be used to access peripherals or network resources, amongst other suitable input/output devices.

One of the cores, core 1 210, is illustrated in greater detail in FIG. 2. The other cores can have a similar or different composition as core 1 210. As shown, core 1 210 includes control logic 240 which controls operation of this particular processor core. The control logic 240 includes an instruction scheduler 241, which can control dispatch and issue of instructions to execution units 250. The control logic 240 further includes an exception handler 242 which can be used to process hardware- or software-based exceptions. The control logic 240 further includes multithreading control logic 243 which can be used to control access to resources when the processor core is operating in a multithreaded mode. The control logic also includes branch control logic 244 which controls evaluation and execution of branch instructions by the processor. For example, the branch control logic 244 can be used to evaluate and execute relative branch instructions, absolute branch instructions, and/or control operation of predicated instructions. In some examples, the branch control logic 244 includes a branch history table and a branch prediction unit. The branch history table and/or branch prediction unit can be used to generate predictions that enable speculation in the processor. For example, the branch control logic 244 can predict that a particular branch instruction will be taken or not taken and speculatively execute additional instructions within an instruction window based on the prediction. In some examples, the branch predictions are associated with particular instructions in the instruction window. In other examples, the branch predictions are based on a running statistic of whether branches have been taken or not taken within a certain number of instructions in an instruction window.

The execution units 250 are used to perform calculations when performing operations such as those operation specified by processor instructions. In the illustrated example, the execution units 250 include an integer execution unit 255, a floating-point execution unit 256, and a vector execution unit 257. The integer execution unit can be used to perform integer arithmetic operations such as addition, subtraction, multiplication, or division, shift and rotate operations, or other suitable integer arithmetic operations. In some examples, the integer execution unit 255 includes an arithmetic logic unit (ALU). The floating-point execution unit 256 can perform single, double, or other precision floating-point operations. The vector execution unit 257 can be used to perform vector operations, for example single instruction multiple data (SIMD) instructions according to a particular set of vector instructions. Examples of vector instructions include, but are not limited to, Intel SSE, SSE2, AVX, and AUX2 instruction sets; ARM Neon, SVE, and SVE2 instruction sets; PowerPCT AltiVec instruction set; and certain vector examples of GPM instruction sets by NVIDIA and others.

The processor core 210 further includes a memory system 260 including a level 1 (L1) instruction cache 261, an L1 data cache 262, and a load-store unit 263. The instruction cache can be used to store instructions fetched from the shared logic portion 220. Similarly, the data cache can store source operands for operations performed by the processor core and can also access memory via the memory controller in the shared logic resources 220. The load-store unit 263 can regulate operation of the instruction cache 261 and data cache 262. For example, certain examples of the load-store unit include logic circuitry that sequences memory load and store operations, controls the L1 instruction cache and L1 data cache, and implements other control logic relating to core memory operations. The load-store unit 263 uses a translation lookaside buffer (TLB) 264 to translate logical addresses to physical addresses used to access the first and/or second level caches 261, 262, and/or 230. In some examples, the shared logic portion 220 includes a TLB instead of, or in addition to, TLBs in the individual cores 210-213 that translates logical addresses to physical addresses.

The processor core further includes a register file 270 that stores programmer visible architectural registers that are referenced by instructions executed by the processor. Architectural registers are distinguished from microarchitectural registers and that the architectural registers are typically specified by instruction set architecture of the processor, while microarchitectural registers store data that is used in performing the instructions, but is typically not programmer-visible.

The computing system 201, including individual cores 210-213, control logic 240, the memory controller 231, and other associated components, can be implemented using similar hardware components as the computing system 110, cores 115 and 116, control logic 130, and speculation tracking and remediation unit 160, as described in further detail above.

### V. Example Remediation of Speculation Side Effects

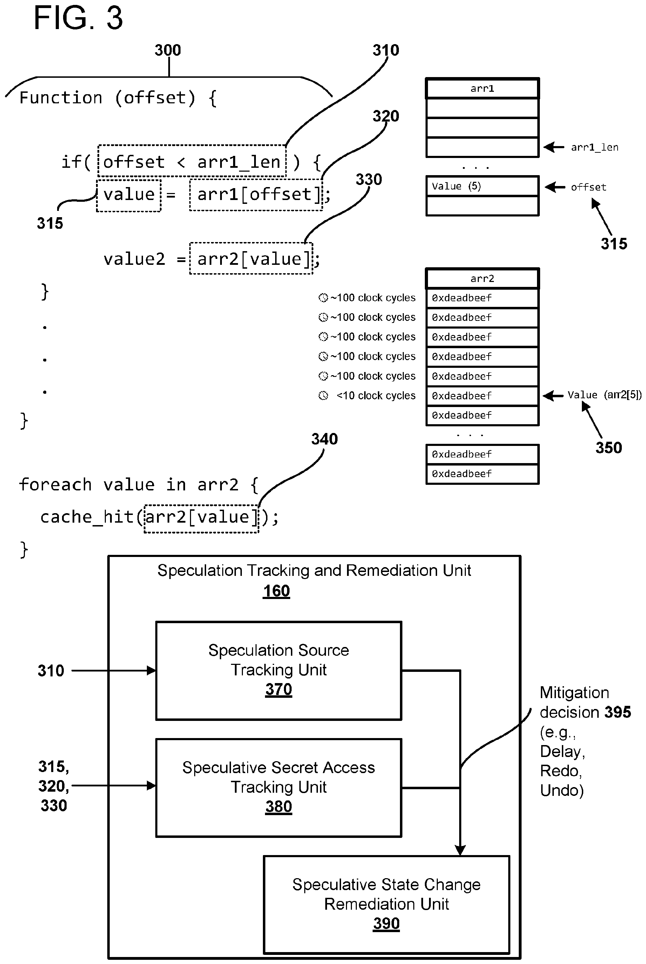

FIG. 3 illustrates an example of source code 300 that can be compiled and executed to present a vulnerability that can be remedied by certain examples of the disclosed technology. This source code 300 is an example of the Spectre-V1 exploit. When the code is executed, the comparison in the *if* statement condition creating the branch instruction 310 will execute as an array length check that causes a branch instruction to be executed by the processor running the code. Because the conditional may take some time to evaluate, the processor can speculatively execute instructions by predicting that the code inside the braces will execute. Thus, even if the value of the variable offset is greater than or equal to the array length, some of the instructions may be executed (but not committed) by the microarchitecture. Thus, speculative execution of the speculative array operation 320 (*arr1[offset]*) will taint the destination register of the speculative load (*value*)*.* The memory value stored at the out-of-bounds address *arr1[offset]* could be a secret value created by another process. This can be exploited by an attacker. For example, if a load instruction uses a secret value as an address for a subsequent load (*arr2[value]* 330), then subsequent accesses to that memory location will result in a cache hit. For example, after performing the speculative load to access secret data, additional code can be executed 340 to iterate and attempt a load for each value in the array *arr2.* The latency to access the values can be measured by an attacker using a timer. Thus, when the cache line hits at the offset 350 corresponding to the secret value (5), the latency of the cache will be greatly reduced. From this information, it can be deduced that the secret value is 5. Certain processors implemented according to the disclosed technology can be configured to track registers that have received data from tainted loads. The processor can be configured to propagate this taint as the speculative value is consumed by subsequent instructions and thereby taint destination registers of those instructions. Based on whether the register is tainted, the load is blocked in the instruction scheduler to prevent speculative cache state changes. The load can become unblocked after the original load, the tainted source, becomes non-speculative and the taint resolves. Thus, in the case of miss-speculation, no changes are visible in the cache based on tainted secrets, thereby preventing leakage of information from the cache. Certain processors implemented according to the disclosed technology can be configured with a remediation unit, that can address this information leakage by using a delay, redo, or undo mechanism to adjust dispatch, issue, or execution of side-effect causing operations like loads.

FIG. 3 also depicts an example of a speculation side effect attack in an example of how the speculation tracking and remediation unit 160 can be used to mitigate the attack. Taint-source operations can be tracked by the speculation tracking and remediation unit 160 of the processor. For example, using the speculation source tracking unit 370, speculation-source instruction such as the branch instruction 310 can be monitored to determine instructions that are executed speculatively based on the speculation-source operation as well as to determine when the taint-source operation condition is resolved. Similarly, the speculative secret access tracking unit 380 can track taint-source operations 315, 320, and 330 so that spread of potentially tainted operations through the processor can be tracked as issue and execution proceed. Both units 370 and 380 can send signals to the speculative state change remediation unit 390, which can determine how to address potential speculative access. In some examples, a signal indicating a remediation mechanism 395 is generated and sent to the remediation unit 390. For example, if it is determined that there is speculative access to tainted registers, the remediation unit can address this access by using a delay, redo, or undo mechanism to adjust dispatch, issue, or execution of tainted operations. The mechanism can be selected from a plurality of mitigation schemes using information in a profiler, as will be discussed in further detail below. In some examples, the signal indicating a remediation mechanism 395 can indicate one or more schemes, where at least one of the schemes is implemented using two different parameters. For example, one selectable delay scheme can cause the processor to delay issue or execution of a speculative load, while a second selectable delay scheme can cause the processor to execute, but delay writeback or commit of the speculative load.

### VI. Example Use of Mitigation Schemes Selected Using a Profiler

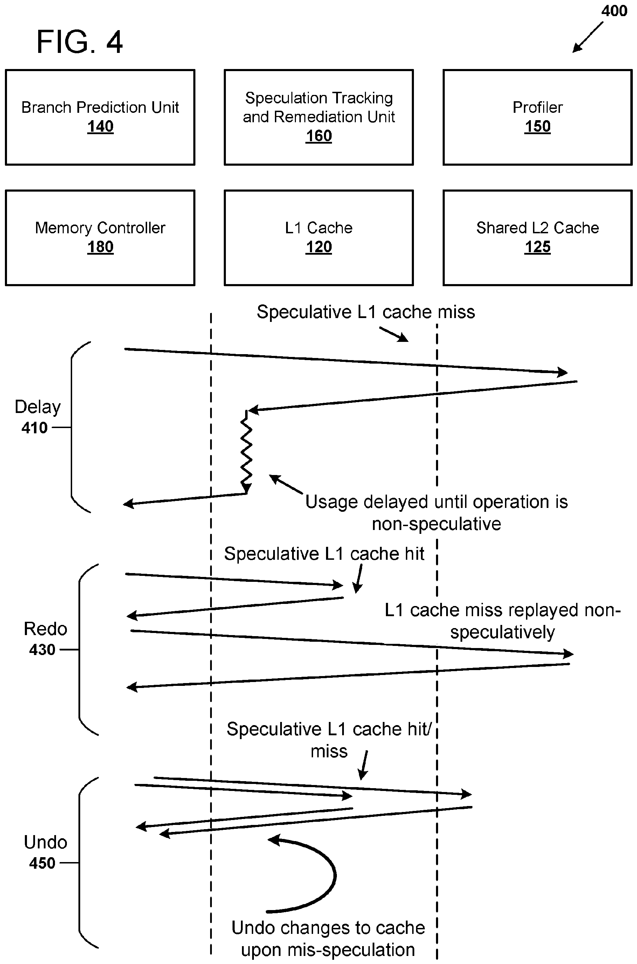

FIG. 4 is a diagram 400 illustrating processor components that can be used to mitigate side channel speculative attacks, and three example mitigation schemes for such attacks, as can be implemented in certain examples of the disclosed technology. Components that are used in this mitigation include a branch prediction unit 140, a profiler 150, and a speculation tracking and remediation unit 160. These components are used to modify operation of the illustrated load-store unit 180, L1 cache 120, and shared L2 cache 125 when certain operations are being performed speculatively.

The three examples schemes include a delay scheme 410, a redo scheme 430, and an undo scheme 450. The diagram 400 illustrates how operation of a memory load proceeds with respect to the load-store unit 180, the L1 cache 120, and the L2 cache 125.

The illustrated delay scheme 410 shows an example of a speculative mode operation that is mitigated by delaying the memory load until the operation becomes nonspeculative. Thus, when there is a load, the information is loaded from the L1 cache, the L2 cache, or the main memory, but providing the data to load-store unit is delayed until the speculation-state of the load resolves, and it is determined that the speculation source will actually lead to the memory load operation being executed. Thus, usage of a speculative memory load is delayed, and dependent operation wakeup is delayed until the load becomes non-speculative. However, this delay scheme 410 adversely impacts compute-bound workloads with more L1-Hits, since extra delays are introduced in converting a one-cycle L1-Hit to a multi-cycle operation with the branch-resolution delay padded onto the L 1-Hit latency. The impact is seen in FIG. 4, which depicts slowdown with delay scheme. Workloads with high L1-hits are heavily slowed-down with a delay-based approach.

The illustrated redo scheme 430 shows an example of a speculative mode operation that is mitigated by replaying all L1 cache misses non-speculatively. As shown, this approach allows speculative L1 cache hits to proceed without delay, as they do not change state of the L1 cache, but this scheme blocks all speculative L1 cache misses and then re-performs them once they are resolved to be non-speculative. As a result, L1 cache hits do not suffer delay, however, speculative L1 cache misses are adversely delayed as the high branch resolution time is serialized with the high L1 cache miss latency period as a result, as shown in FIG. 4, workloads with high L1 cache misses are heavily slowed down using the redo scheme 430.

The illustrated undo scheme 450 shows an example of a speculative mode operation that is mitigated by allowing speculative changes to the caches but in doing them upon miss speculation. Thus, if a workload has a high branch miss prediction rate, and undo-based approach may incur high-performance overhead as the undo mechanism may need to be invoked more frequently. Thus, the performance of a processor operating using an undo mitigation scheme will improve if the branch miss prediction rate is relatively lower.

### VII. Example Use of Profiler in Speculation Remediation

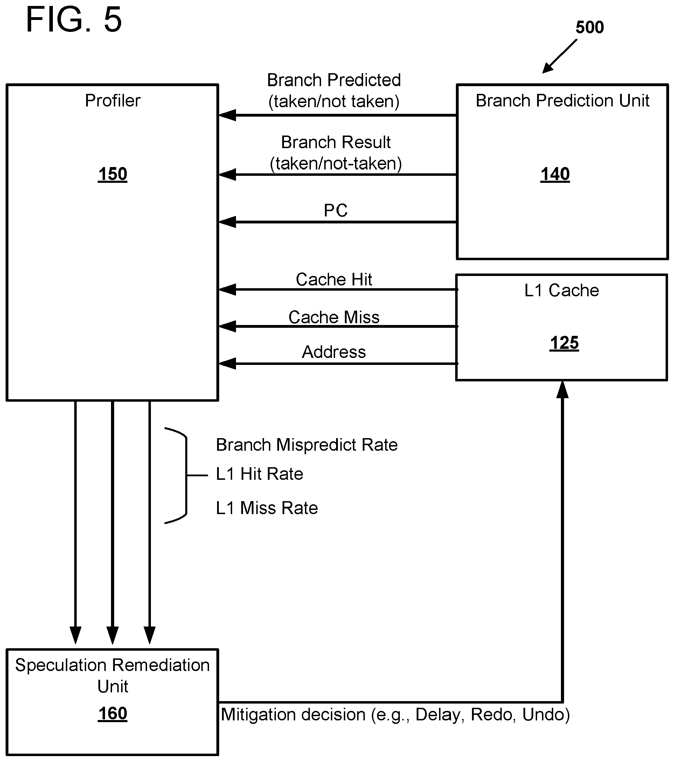

FIG. 5 is a diagram 500 illustrating an example use of a profiler to select a speculation remediation scheme, as can be implemented in certain examples of the disclosed technology. In the illustrated example, the mitigation scheme for a processor cache is selected. In other examples, mitigation schemes for other processor components that are affected by speculative operation can be implemented.

As shown in FIG. 5, a branch prediction unit 140 generates branch predictions for control flow instructions executed by a processor. Speculative execution occurs based on the branch prediction. However, the branch prediction will not always be correct, and so counters implemented in the branch prediction unit 140 can be used to count statistics on the accuracy of branch prediction. Signals indicating whether a branch is predicted (taken or not taken), the predicted branch result (whether the predicted branch was taken or not taken) can be sent to the profiler 150. In other examples, other statistics including a number of branch hits, a number of branch misses, a rate or ratio of branch hits, and a number or ratio of branch misses are examples of statistics that can be collected during operation of the processor and sent to the profiler 150. In some examples, a value of the program counter (PC) associated with the branch prediction can also be sent to the profiler 150. The PC can be used to associate branch prediction accuracy with particular portions of object code being executed or with particular instructions.

One or more processor caches can also send information to the profiler 150. For example, as shown in FIG. 5, the L1 cache 120 sends data indicating cache performance to the profiler. A number of cache hits, a ratio of cache hits, a number of cache misses, and a ratio of cache misses are examples of statistics that can be collected during operation of the processor and sent to the profiler 150. In some examples, the caches can also send data indicating one or more addresses associated with cache hits or misses.

The profiler 150 uses data from the branch prediction unit and/or the caches in order to generate aggregated statistics such as branch mis-predict rate, L1 cache hit rate, or L1 cache miss rate. These aggregated statistics can be sent to the speculation tracking and remediation unit 160 in order to generate a mitigation decision. In some examples, the profiler 150 uses real-time data from the branch production unit and/or the caches to generate the mitigation decision that incorporates the real-time execution state of the processor. The mitigation decision generates a signal that is used to indicate a selected mitigation scheme to the L1 cache 125. For example, mitigation decision signal can indicate that one of a delay scheme, a redo scheme, or an undo scheme are selected for mitigating side effects of speculative execution. In certain examples, a speculation shadow buffer and/or taint matrix can be one of the selected mitigation schemes, in addition to the unto, redo, and delay schemes. In some examples, the mitigation decision signal can indicate one or more schemes, where at least one of the schemes is implemented using two different parameters. For example, one selectable delay scheme can cause the processor to delay issue or execution of a speculative load, while a second selectable delay scheme can cause the processor to execute, but delay writeback or commit of the speculative load. The mitigation decision can also be modulated by static hints from the program regarding the security sensitivity of the memory location that is being accessed. For example, static hints generated by a compiler and/or based on profiler data generated by profiling instructions from previous runs of a program can be used to generate a default or preliminary mitigation decision, or be combined with real-time data gathered by a hardware profiler of the processor core.

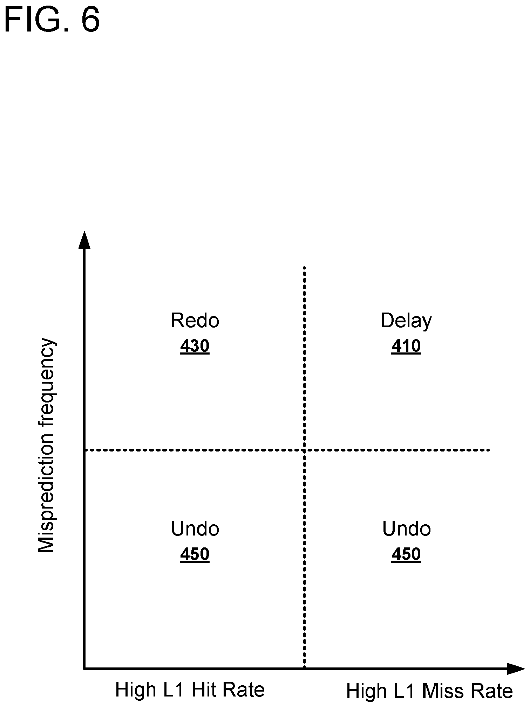

An example representation of a table used to select a mitigation scheme as shown in FIG. 6. As shown, when the miss prediction frequency is high and the L1 cache miss rate is high, the delay scheme 410 is selected. When the mis-prediction frequency is high, but the L1 cache hit rate is relatively high (the L1 cache miss rate is low), then the redo scheme 430 is selected. When the mis-prediction frequency is relatively low, then the undo scheme 450 is selected, regardless of cache miss rate. As will be readily understood to one of ordinary skill in the relevant art having the benefit of the present disclosure, other methods or parameters can be used to select the mitigation scheme. For example, in examples where only two mitigation schemes are available, a different table will be used to select the mitigation scheme than the one shown in FIG. 6. In other examples, there may be more mitigation schemes available, and so the example table would be suitably modified. In some examples, the values used in the illustrated table are predetermined and programmed into the processor itself. In other examples, the mitigation scheme table may be dynamically adjusted based on feedback from the programmer, an operating system, or other suitable methods of selecting a more appropriate mitigation scheme based on current or past workloads of the processor.

### VIII. Example Taint-Matrix Mitigation Scheme

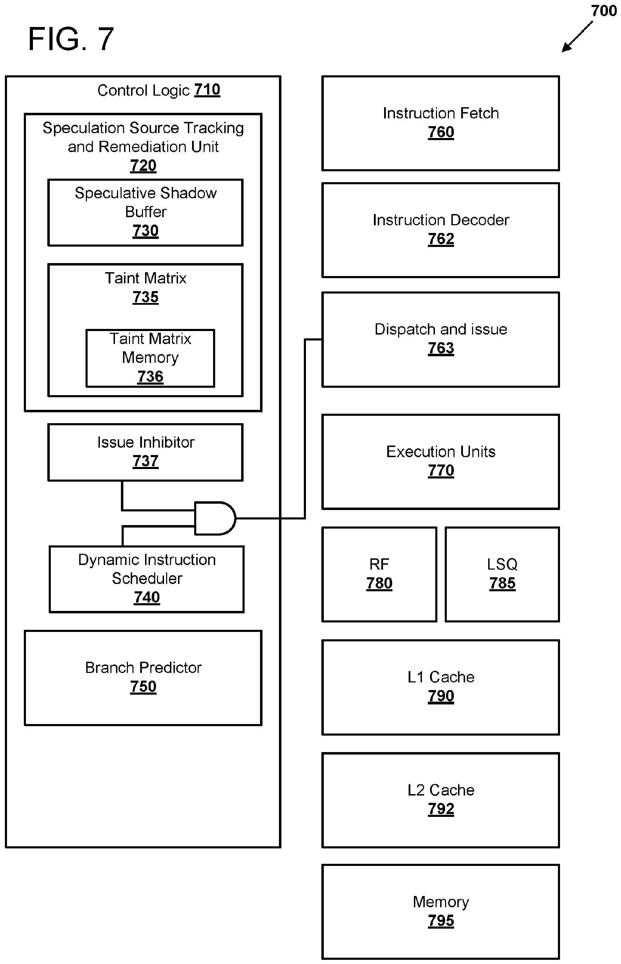

A further detailed example of a specific version of a delay-based mitigation scheme using a taint matrix is discussed below with reference to FIGS. 7-10. In particular, this particular delay-based mitigation scheme uses a speculation shadow register and taint matrix in order to delay some but not all memory operations to address speculative side channel attacks. As will be readily understood to one of ordinary skill in the art having the benefit of the present disclosure, other delay scheme can be implemented that do not use the fine-grained taint matrix discussed in this section. For example, a simpler delay scheme can delay all potentially-tainted operations until a speculation source is resolved, without using the fine-grained tracking using a speculation shadow buffer and taint matrix.

FIG. 7 is a block diagram 700 outlining an example processor microarchitecture in which certain examples of the disclosed technology can be implemented. As shown in the FIG. 7, control logic 710 includes a speculation source tracking and remediation unit 720 which includes a speculative shadow buffer 730, a taint matrix 735, and an issue inhibitor 737. As will be discussed in further detail below, the speculative shadow buffer 730 can be used to identify and monitor speculation-source operations that can lead to taint-source operations. Registers and memory affected by speculative execution can be tracked using the taint matrix 735, which associates sources of taint-source operation in the speculative shadow buffer 730 with affected registers using the taint matrix 735. Based on the data in the speculative shadow buffer 730 and/or the taint matrix 735, logic in the issue inhibitor 737 can determine whether a taint-source instruction should be allowed to proceed through the processor pipeline. The taint-matrix includes a taint-matrix memory 736 that stores taint data. The taint-matrix memory is typically implemented as a register file or small memory that is accessible within the microarchitecture control but is not programmer visible, other than (perhaps) by debug facilities or supervisor-privileged mode instructions. The control logic 710 further includes a dynamic instruction scheduler 740 which tracts instruction dependencies to determine when instructions can proceed to issue. The output of the dynamic instruction scheduler is combined with the output of the speculation source tracking and remediation unit 720 to generate a signal indicating whether particular instructions should proceed to dispatch, issue, and/or execution. As shown in FIG. 7, the control logic 710 further includes a branch predictor 750. The branch predictor can monitor speculation-source operations performed by the processor to make predictions of whether branch instructions as well as other suitable speculation-source instructions will execute, or have their branches be taken or not taken.

Also shown in FIG. 7 is an example set of hardware for performing the processor operations. This includes an instruction fetch unit 760 and instruction decoder 762 and a dispatch and issue unit 763. Instruction fetch unit 760 is used to fetch instructions from memory or instruction cache. The instruction decoder 762 decodes the fetched instructions and generates control signals used to configure the processor and gather input operands for processor operations. The dispatch and issue unit 763 dispatches particular operations to particular execution units 770 of the processor. The dispatch and issue unit 763 also controls when instructions are allowed to issue for performance by the execution units 770. Also shown in FIG. 7 is a register file 780 and a load store queue 785. The processor also includes a memory subsystem, including L1 cache 790, L2 cache 792, and memory 795.

The control logic 710, including speculation source tracking and remediation unit 720, issue inhibitor 737, dynamic instruction scheduler 740, branch predictor 750, and other associated components can be implemented using similar hardware components as the computing system 110, cores 115 and 116, control logic 130, and speculation tracking and remediation unit 160, as described in further detail above.

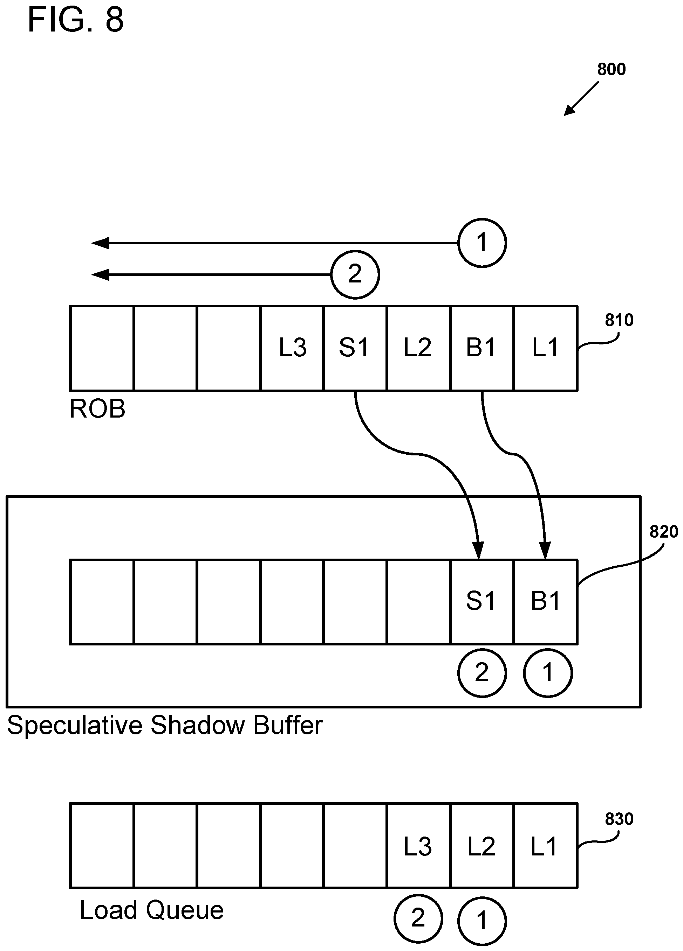

FIG. 8 is a block diagram 800 outlining aspects of an example speculation source tracking unit, as can be implemented in certain examples of the disclosed technology. As shown in FIG. 8, a re-order buffer (ROB) storing tags indicating a number of processor instructions that have been ordered for execution as shown from right to left. For example, a first load instruction L1 will be issued first, followed by a conditional branch instruction B1, a second load instruction L2, a store instruction S1, and a third load instruction L1.

The speculation source tracking unit includes a speculative shadow buffer 820. The speculative shadow buffer 820 stores indicators of instructions in the ROB 810 that have been identified as sources of speculation. Thus, the branch instruction is stored at the head of the speculative shadow buffer 820 followed by the store instruction S1. As indicated above, the branch instruction B1 will taint all instructions that follow it in the ROB 810, until its associated speculation-source operation, determining whether or not a branch will be taken, or in some instances the address of a target branch, have been resolved, and thus following instructions are no longer considered to be speculative. Similarly, the store instruction S1 will taint all instructions that follow it in the ROB 810 until its associated speculation-source operation has resolved, for example, calculation of an address to which data is to be stored for the executing store instruction S1 will gate resolving the instruction, and any instructions which depend on the store instruction S1. Further, instructions in the load queue 830 can be associated with speculative sources. In the illustrated example, the second load instruction L2 is identified as speculative, because it is not known whether the instruction will execute and commit until the speculation-source operation associated with the branch instruction B1 is resolved. Similarly, the third load instruction L3 is speculative until preceding taint-source operations S1 and B1 resolve. As the associated speculation source instructions execute and commit, entries can be removed from the speculative shadow buffer 820, and remediation unit can take appropriate action to complete the mitigation of side-effect causing operations. For example, if delay-mitigation was chosen, then appropriate load-data can be forwarded to dependent instructions. Otherwise, if redo-mitigation was chosen, then load can be replayed safely as the speculation-source instruction has executed. If undo-mitigation was chosen, the side-effects of the load no longer need to be undone.

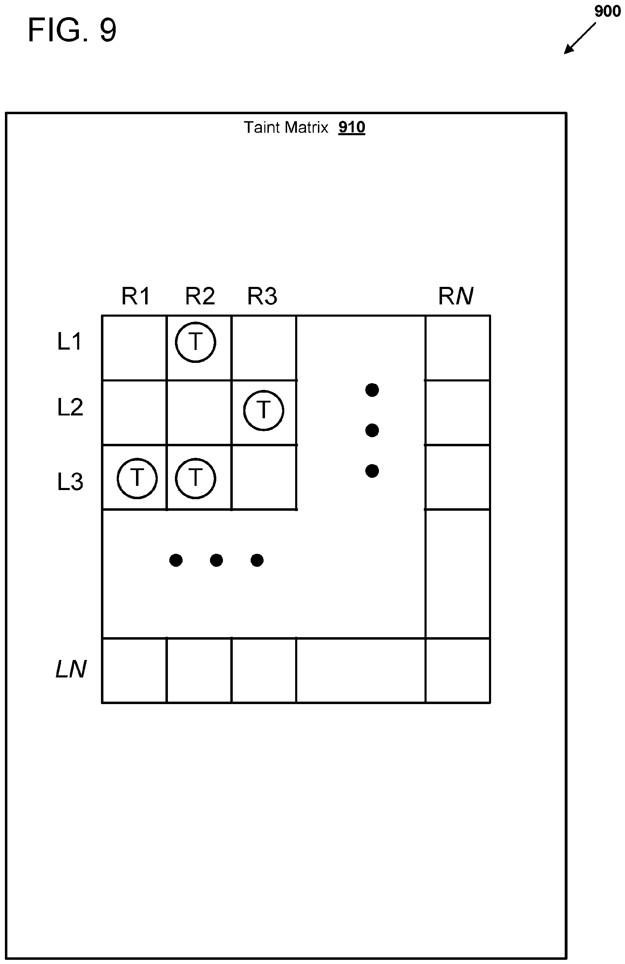

FIG. 9 is a diagram 900 illustrating an example taint matrix 910 that can be used to track sources of speculative taint in accordance with certain examples of the disclosed technology. In the illustrated example, each column in the taint matrix 910 is associated with an architectural register of a processor, for example, R1, R2, R3, *etc..* Each row of the taint matrix 910 is associated with a load instruction, for example, L1, L2, L3, and so on. In a typical implementation, the register columns are associated with either a logical processor register, or a physical processor register, in cases where the processor microarchitecture implements register renaming. For the memory load operations, a tag or other identifier can be used to track which particular load instructions are associated with a particular column of the taint matrix 910. As shown, the taint matrix stores associations between memory load instructions and registers that are affected by the load instruction. For example, the first row indicates that a load instruction L1 is associated with a register R2. This is typical where the memory load instruction writes its result to the register R2. The second row indicates that a load instruction L2 is associated with tainting register R3. The third row indicates that a single load instruction L3 has a taint marker associated with two registers, R1 and R2. This is because, as will be discussed further below, subsequent instructions that use a potentially-tainted value can also be marked as tainted. Thus, when a speculation source is resolved, more than one register that is tracked as being tainted, can be untainted as part of the remediation process.

### IX. Example Method of Mitigating Side Effects Using a

### Mitigation Scheme Selected According to Performance Criteria

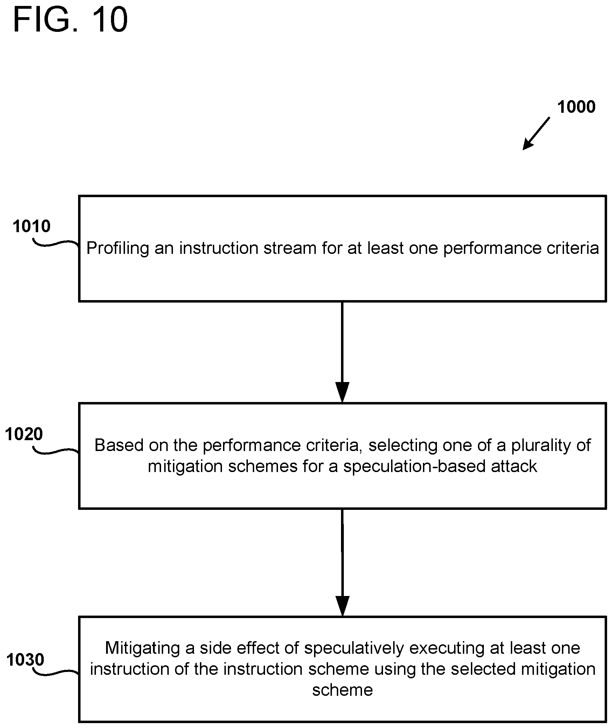

FIG. 10 is a flowchart 1000 outlining an example method of mitigating side effects using a mitigation scheme selected according to performance criteria, as can be implemented in certain examples of the disclosed technology. For example, processors including a speculation tracking and remediation unit such as those discussed above can be used to perform the illustrated method.

At process block 1010, an instruction stream is profiled for at least one performance criteria. For example, statistics related to control flow such as branch mis-prediction rate, as well statistics related to performance of memory structures such as caches, including cache hit or cache miss rates can be collected by a profiler. Typically, the performance criteria will vary based on the amount of speculative execution occurring for a particular instruction stream. Thus, some object code may exhibit higher or lower branch misprediction and/or cache hit or miss rates. In some examples, profiling is performed dynamically during runtime operation of the processor. In some examples, hardware such as a hardware performance counter or a past behavior counter can be used together statistics for the profiler. In some examples, the at least one performance criteria relates to branch prediction, and the profiling is performed using a saturating counter, a Lee-Smith counter, a pattern history table, a branch history table, or a global history table with index sharing. In some examples, the performance criteria is based on accuracy of branch prediction.

At process block 1020, based on the performance criteria collected at process block 1010, one of a plurality of mitigation schemes is selected for mitigating a speculation-based attack. In the invention, the selection of mitigation is performed dynamically during runtime operation of the processor. In some examples, the mitigation scheme is selected from a plurality comprising a delay mechanism, a redo mechanism, and/or an undo mechanism. In some examples, the selecting is performed by measuring the at least one performance criteria when a first one of the mitigation schemes is used when operating the processor, measuring the at least one performance criteria when a second, different one of the mitigation schemes is used when operating the processor, and comparing measurements for the at least one performance criteria when a first one of the mitigation schemes is used when operating the processor to measurements for the at least one performance criteria when a second one of the mitigation schemes is used when operating the processor. In some examples, a table such as the table shown in FIG. 6 is used to determine a mitigation scheme based on the relative branch mis-prediction rate and cache hit/miss rate. In some examples, the selecting is based at least in part on a compiler hint inserted into object code of an executing instruction stream that indicates performance criteria. For example, the compiler hint may indicate portions of code that a compiler has determined will perform better using one of the plurality of mitigation schemes. In some examples, the compiler hint may indicate performance criteria used to select one of the plurality of mitigation schemes.

At process block 1030, a side effect of speculatively executing a processor operation is mitigated using the selected mitigation scheme. For example, the mitigation can include at least one of: inhibiting fetch of the speculative operation; inhibiting decode of the speculative operation; inhibiting dispatch of the speculative operation; inhibiting issue of the speculative operation; inhibiting execution of the speculative operation; inhibiting memory access of the speculative operation; inhibiting register writeback of the speculative operation; or inhibiting commitment of the speculative operation. In some examples, the side effect affects state of at least one of: a data cache of the processor, an instruction cache of the processor, a register read port of the processor, a register write port of the processor, a memory load port of the processor, a memory store port of the processor, symmetric multi-threading logic of the processor, a translation lookaside buffer of the processor, a vector processing unit of the processor, a branch target history table of the processor, or a branch target buffer of the processor.

Examples of speculative operations that can be mitigated using a selected mitigation scheme include a memory load operation, a memory store operation, a memory array read operation, a memory array write operation, a memory store forwarding operation, a memory load forwarding operation, a relative branch instruction, an absolute-addressed branch instruction, a predicated instruction, an implied addressing mode operation, an immediate addressing mode operation, a register addressing mode memory operation, an indirect register addressing mode operation, an automatically indexed addressing mode operation (including an address calculated by incrementing or decrementing a base address), a direct addressing mode operation, an indirect addressing mode operation, an indexed addressing mode operation, a register based indexed addressing mode operation, a program counter relative addressing mode operation, or a base register addressing mode operation. Further, the source of speculation can be based on a number of different speculation sources, including operations speculatively executed based on a conditional operation, the conditional operation comprising at least one of: a control flow operation, a data flow operation, a branch operation, a predicated operation, a memory store address calculation, a memory consistency operation, a compound atomic operation, a flag control operation, a transactional operation, or an exception operation.

### X. Example Generalized Computing Environment

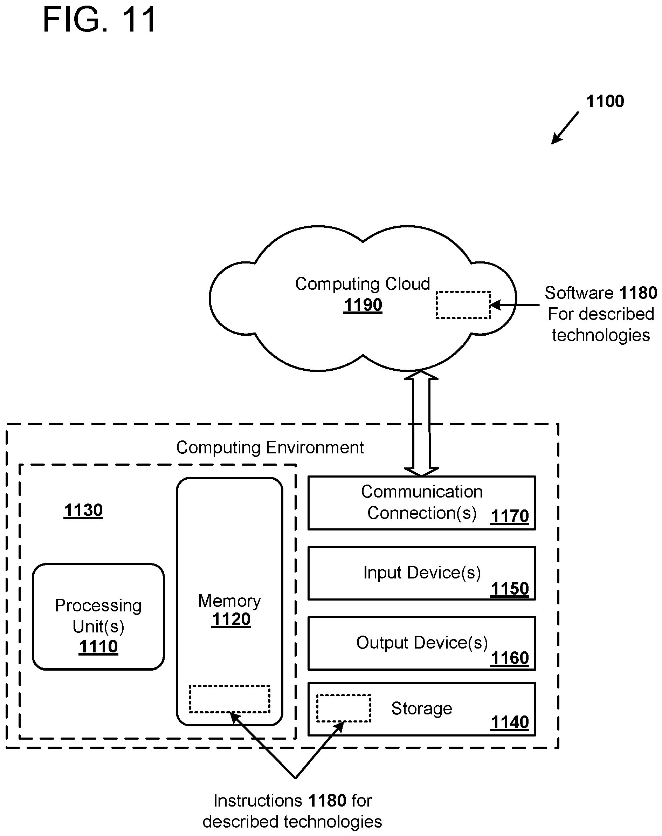

FIG. 11 illustrates a generalized example of a suitable computing environment 1100 in which described embodiments, techniques, and technologies, including selecting a mitigation scheme and mitigating speculative operation side effects using the mitigation scheme selected based on processor performance criteria, can be implemented.

The computing environment 1100 is not intended to suggest any limitation as to scope of use or functionality of the technology, as the technology may be implemented in diverse general-purpose or special-purpose computing environments. For example, the disclosed technology may be implemented with other computer system configurations, including hand held devices, multi-processor systems, programmable consumer electronics, network PCs, minicomputers, mainframe computers, and the like. The disclosed technology may also be practiced in distributed computing environments where tasks are performed by remote processing devices that are linked through a communications network. In a distributed computing environment, program modules may be located in both local and remote memory storage devices.

With reference to FIG. 11, the computing environment 1100 includes at least one processing unit 1110 and memory 1120. In FIG. 11, this most basic configuration 1130 is included within a dashed line. The processing unit 1110 executes computer-executable instructions and may be a real or a virtual processor. In a multi-processing system, multiple processing units execute computer-executable instructions to increase processing power and as such, multiple processors can be running simultaneously. The memory 1120 may be volatile memory (*e.g.,* registers, cache, RAM), non-volatile memory (*e.g.,* ROM, EEPROM, flash memory, etc.), or some combination of the two. The memory 1120 stores software 1180, images, and video that can, for example, implement the technologies described herein. A computing environment may have additional features. For example, the computing environment 1100 includes storage 1140, one or more input devices 1150, one or more output devices 1160, and one or more communication connections 1170. An interconnection mechanism (not shown) such as a bus, a controller, or a network, interconnects the components of the computing environment 1100. Typically, operating system software (not shown) provides an operating environment for other software executing in the computing environment 1100, and coordinates activities of the components of the computing environment 1100.

The storage 1140 may be removable or non-removable, and includes magnetic disks, magnetic tapes or cassettes, CD-ROMs, CD-RWs, DVDs, or any other medium which can be used to store information and that can be accessed within the computing environment 1100. The storage 1140 stores instructions for the software 1180, which can be used to implement technologies described herein.

The input device(s) 1150 may be a touch input device, such as a keyboard, keypad, mouse, touch screen display, pen, or trackball, a voice input device, a scanning device, or another device, that provides input to the computing environment 1100. For audio, the input device(s) 1150 may be a sound card or similar device that accepts audio input in analog or digital form, or a CD-ROM reader that provides audio samples to the computing environment 1100. The output device(s) 1160 may be a display, printer, speaker, CD-writer, or another device that provides output from the computing environment 1100.

The communication connection(s) 1170 enable communication over a communication medium (e.g., a connecting network) to another computing entity. The communication medium conveys information such as computer-executable instructions, compressed graphics information, video, or other data in a modulated data signal. The communication connection(s) 1170 are not limited to wired connections (*e*.*g*., megabit or gigabit Ethernet, Infiniband, Fibre Channel over electrical or fiber optic connections) but also include wireless technologies (*e.g*., RF connections via Bluetooth, WiFi (IEEE 802.11a/b/n), WiMax, cellular, satellite, laser, infrared) and other suitable communication connections for providing a network connection for the software and hardware. In a virtual host environment, the communication(s) connections can be a virtualized network connection provided by the virtual host.

Some embodiments of the disclosed methods can be performed using computer-executable instructions implementing all or a portion of the disclosed technology in a computing cloud 1190. For example, the disclosed methods can be executed on processing units 1110 located in the computing environment 1130, or the disclosed methods can be executed on servers located in the computing cloud 1190.

Computer-readable media are any available media that can be accessed within a computing environment 1100. By way of example, and not limitation, with the computing environment 1100, computer-readable media include memory 1120 and/or storage 1140. As should be readily understood, the term computer-readable storage media includes the media for data storage such as memory 1120 and storage 1140, and not transmission media such as modulated data signals.

### XI. Additional Examples of the Disclosed Technology

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by a processor or other data processing apparatus, cause the apparatus to perform the actions. One general aspect includes profiling an instruction stream for at least one performance criteria. The method also includes based on the performance criteria, selecting one of a plurality of mitigation schemes for a speculation-based attack. Other embodiments of this aspect include corresponding computer systems, apparatus, and computer programs recorded on one or more computer storage devices, each configured to perform the actions of the methods.

Implementations may include one or more of the following features. The method where the at least one performance criteria varies due to speculative execution. The method where the plurality of mitigation schemes includes at least one of a delay mechanism, a redo mechanism, or an undo mechanism. In some examples, the plurality of mitigation schemes includes at least the delay mechanism and the redo mechanism. In some examples, the plurality of mitigation schemes includes at least the delay mechanism and the undo mechanism. In some examples, the plurality of mitigation schemes includes at least the redo mechanism and the undo mechanism. In some examples, the plurality of mitigation schemes includes at least one of a delay mechanism, a redo mechanism, or an undo mechanism, and a scheme to not mitigate the speculation-based attack, or a restrictive scheme that restricts all instructions that are potentially tainted by a speculation source. In some examples, selective mitigation using a taint matrix is employed. In some examples, the mitigation scheme is selected to be used with only certain code, threads, processes, or processor cores, while other code does not use mitigation for speculation-based attacks. For example, code, threads, processes, and/or cores that are designated as being more sensitive or having a higher level of protection can use the profile to select a scheme, while other aspects have a lower level of protection, use a different scheme, or use no mitigation scheme.

Implementations may further include one or more of the following features. The method where the profiling and the selecting are performed dynamically during run-time operation of the processor. The method where the profiling is performed using a hardware performance counter of the processor. The method where the profiling is performed real-time during execution of a program. The method where the selecting combines hints generated by a compiler or profiler data gathered from previous execution of a program with real-time data measured during execution of a program. The method where the at least one performance criteria relates to branch prediction, and the profiling is performed using a saturating counter, a Lee-Smith counter, a pattern history table, a branch history table, or a global history table with index sharing. The method where the at least one performance criteria is measured with a past behavior counter. The method where: the at least one performance criteria is based on accuracy of branch prediction. The method where the at least one performance criteria is based on cache hit rate or cache miss rate for a cache of the processor. The method where the selecting is performed by: measuring the at least one performance criteria when a first one of the mitigation schemes is used when operating the processor. The method may also include measuring the at least one performance criteria when a second, different one of the mitigation schemes is used when operating the processor. The method may also include comparing measurements for the at least one performance criteria when a first one of the mitigation schemes is used when operating the processor to measurements for the at least one performance criteria when a second one of the mitigation schemes is used when operating the processor. The method further including selecting a scheme using a compiler hint inserted in object code that indicates the performance criteria. The method further including: mitigating a side effect of speculatively executing at least one instruction of the instruction stream using the selected mitigation scheme. The method where the mitigating includes at least one of: inhibiting fetch of the speculative operation; inhibiting decode of the speculative operation; inhibiting dispatch of the speculative operation; inhibiting issue of the speculative operation; inhibiting execution of the speculative operation; inhibiting memory access of the speculative operation; inhibiting register writeback of the speculative operation, or inhibiting commitment of the speculative operation. The method where the at least one instruction is speculatively executed based on a conditional operation, the conditional operation including at least one of: a control flow operation, a data flow operation, a branch operation, a predicated operation, a memory store address calculation, a memory operation, a compound atomic operation, a flag control operation, a transactional operation, or an exception operation. The method where performing the at least one instruction includes speculatively performing at least one of the following operations: a memory load operation, a memory store operation, a memory array read operation, a memory array write operation, a memory store forwarding operation, a memory load forwarding operation, a relative branch instruction, an absolute-addressed branch instruction, a predicated instruction, an implied addressing mode operation, an immediate addressing mode operation, a register addressing mode memory operation, an indirect register addressing mode operation, an automatically indexed addressing mode operation (including an address calculated by incremented or decrementing a base address), a direct addressing mode operation, an indirect addressing mode operation, an indexed addressing mode operation, a register based indexed addressing mode operation, a program counter relative addressing mode operation, or a base register addressing mode operation. The method where the side effect affects state of at least one of: a data cache of the processor, an instruction cache of the processor, a register read port of the processor, a register write port of the processor, a memory load port of the processor, a memory store port of the processor, symmetric multi-threading logic of the processor, a translation lookaside buffer of the processor, a vector processing unit of the processor, a branch target history table of the processor, or a branch target buffer of the processor. Implementations of the described techniques may include hardware, a method or process, or computer executable instructions stored on a computer-accessible medium.

One general aspect includes a computer-readable storage medium storing computer-readable instructions that when executed by a computer, cause the computer to generate a design file for a circuit, the circuit when manufactured causing the processor to perform the method. Other embodiments of this aspect include corresponding computer systems, apparatus, and computer programs recorded on one or more computer storage devices, each configured to perform the actions of the methods.

One general aspect includes an apparatus implementing a processor, the apparatus including: memory situated to store profiler data for measuring at least one performance criteria for an instruction stream executed by the processor; and control logic configured to:. The apparatus also includes based on the measured performance criteria, select one of a plurality of mitigation schemes to mitigate a speculation-based attack on the apparatus. Other embodiments of this aspect include corresponding computer systems, apparatus, and computer programs recorded on one or more computer storage devices, each configured to perform the actions of the methods.

Implementations may include one or more of the following features. The apparatus where the at least one performance criteria varies due to speculative execution. The apparatus where the plurality of mitigation schemes includes at least one of a delay mechanism, a redo mechanism, or an undo mechanism. The apparatus where: the profiling and the selecting are performed dynamically during run-time operation of the processor. The apparatus where the profiling is performed using a hardware performance counter of the processor. The apparatus where the apparatus further includes branch prediction hardware, and where the at least one performance criteria relates to branch prediction, and the profiling is performed using at least one of the following branch prediction hardware: a saturating counter, a lee-smith counter, a pattern history table, a branch history table, or a global history table with index sharing. The apparatus further including a past behavior counter, where the at least one performance criteria is measured with a past behavior counter. The apparatus where processor includes a cache, and where the at least one performance criteria is based on cache hit rate or cache miss rate for the cache. The apparatus where the apparatus is further configured to perform at least one of any of the methods. The apparatus where the control logic includes a taint matrix, and where at least one of the mitigation schemes uses the taint matrix to determine dependencies to mitigate the speculation-based attack. The apparatus where the taint matrix stores data indicating an operation dependent upon the identified speculative operation, and at least one of the mitigation schemes includes suppressing at least one side effect of the identified speculative operation until conditional state determining commitment of the speculative operation is resolved. The apparatus where the control logic further includes: circuitry configured to clear taint data in the memory to indicate whether the identified speculative operation has resolved. The apparatus may also include an execution unit that performs the speculative operation, causing the at least one side effect. The apparatus may also include an execution unit that, based on the cleared taint data, performs the dependent operation. The apparatus where. The apparatus may also include the control logic includes a taint matrix, indicating a conditional instruction, which when executed, resolves conditional state of a speculation-source operation. The apparatus where the control logic includes a taint matrix storing data indicating at least two operations dependent upon the identified speculative operation. The apparatus where the control logic includes a taint matrix storing data indicating that a speculative operation is caused by executing a memory load instruction and the conditional state is determined by executing a branch instruction. Implementations of the described techniques may include hardware, a method or process, or computer software on a computer-accessible medium. Other embodiments of this aspect include corresponding computer systems, apparatus, and computer programs recorded on one or more computer storage devices, each configured to perform the actions of the methods.

In view of the many possible embodiments to which the principles of the disclosed subject matter may be applied, it should be recognized that the illustrated embodiments are only preferred examples and should not be taken as limiting the scope of the claims to those preferred examples. Rather, the scope of the claimed subject matter is defined by the following claims. We therefore claim as our invention all that comes within the scope of these claims.

## Claims

1. A method (1000) of operating a processor, the method comprising:
profiling (1010) an instruction stream for at least one performance criteria; and
based on the performance criteria, selecting (1020) one of a plurality of mitigation schemes for a speculation-based attack; the method **characterised in that**:
wherein the selecting is performed by:
measuring the at least one performance criteria when a first one of the mitigation schemes is used when operating the processor;
measuring the at least one performance criteria when a second, different one of the mitigation schemes is used when operating the processor; and
comparing measurements for the at least one performance criteria when a first one of the mitigation schemes is used when operating the processor to measurements for the at least one performance criteria when a second one of the mitigation schemes is used when operating the processor.

2. The method of claim 1, wherein:
the at least one performance criteria varies due to speculative execution; and
the plurality of mitigation schemes comprises at least one of a delay mechanism, a redo mechanism, or an undo mechanism.

3. The method of claim 1 or claim 2, wherein the selecting combines hints generated by a compiler or profiler data gathered from previous execution of a program with real-time data measured during execution of a program.

4. The method of claim 1, wherein:
the at least one performance criteria is based on at least one of: accuracy of branch prediction, a cache hit rate for a cache of the processor, or cache miss rate for a cache of the processor.

5. The method of claim 1, further comprising:
mitigating a side effect of speculatively executing at least one instruction of the instruction stream using the selected mitigation scheme, the mitigating further comprising at least one of: inhibiting fetch of the speculative operation; inhibiting decode of the speculative operation; inhibiting dispatch of the speculative operation; inhibiting issue of the speculative operation; inhibiting execution of the speculative operation; inhibiting memory access of the speculative operation; inhibiting register writeback of the speculative operation, or inhibiting commitment of the speculative operation.

6. An apparatus implementing a processor (115), the apparatus comprising:
memory situated to store profiler (150) data for measuring at least one performance criteria for an instruction stream executed by the processor; and
control logic (130, 710) configured to:
based on the measured performance criteria, select, by
measuring the at least one performance criteria when a first one of the mitigation schemes is used when operating the processor;
measuring the at least one performance criteria when a second, different one of the mitigation schemes is used when operating the processor; and
comparing measurements for the at least one performance criteria when a first one of the mitigation schemes is used when operating the processor to measurements for the at least one performance criteria when a second one of the mitigation schemes is used when operating the processor,
one of a plurality of mitigation schemes to mitigate a speculation-based attack on the apparatus.

7. The apparatus of claim 6, wherein the plurality of mitigation schemes comprises at least one of a delay mechanism, a redo mechanism, or an undo mechanism.

8. The apparatus of claim 6 or claim 7, wherein:
the profiling and the selecting are performed dynamically during run-time operation of the processor, at least one of the profiling or the selecting being performed using a hardware performance counter of the processor.

9. The apparatus of claim 6 or claim 7, wherein the apparatus further comprises branch prediction hardware (140), and wherein the at least one performance criteria relates to branch prediction, and the profiling is performed using at least one of the following branch prediction hardware: a saturating counter, a Lee-Smith counter, a pattern history table, a branch history table, or a global history table with index sharing.

10. The apparatus of claim 6 or claim 7, further comprising a past behavior counter, wherein the at least one performance criteria is measured with a past behavior counter.

11. The apparatus of claim 6 or claim 7, wherein the processor comprises a cache, and wherein the at least one performance criteria is based on cache hit rate or cache miss rate for the cache.

12. The apparatus of claim 6 or claim 7, wherein the control logic (710) comprises a taint matrix (735), and wherein at least one of the mitigation schemes uses the taint matrix to determine dependencies to mitigate the speculation-based attack.

13. The apparatus of claim 6 or claim 7, wherein the control logic further comprises:
circuitry configured to clear taint data in the memory to indicate whether the identified speculative operation has resolved;
an execution unit that performs the speculative operation, causing the at least one side effect; and
an execution unit that, based on the cleared taint data, performs the dependent operation.

14. The apparatus of claim 6 or claim 7, wherein
the control logic (710) comprises a taint matrix (735), indicating a conditional instruction, which when executed, resolves conditional state of a speculation-source operation, the taint matrix storing data indicating at least two operations dependent upon the identified speculative operation, the taint matrix further storing data indicating that a speculative operation is caused by executing a memory load instruction and the conditional state is determined by executing a branch instruction.

## Patentansprüche

1. Verfahren (1000) zum Betreiben eines Prozessors, wobei das Verfahren Folgendes umfasst:
Profiling (1010) eines Anweisungsstroms auf mindestens ein Leistungskriterium; und
Auswählen (1020) eines von einer Vielzahl von Linderungsschemata für einen Angriff auf Spekulationsbasis basierend auf den Leistungskriterien; wobei das Verfahren durch Folgendes gekennzeichnet ist:
wobei das Auswählen durchgeführt wird durch:
Messen des mindestens einen Leistungskriteriums, wenn beim Betreiben des Prozessors ein erstes der Linderungsschemata verwendet wird;
Messen des mindestens einen Leistungskriteriums, wenn beim Betreiben des Prozessors ein zweites anderes der Linderungsschemata verwendet wird; und
Vergleichen von Messwerten für das mindestens eine Leistungskriterium, wenn beim Betreiben des Prozessors ein erstes der Linderungsschemata verwendet wird, mit Messwerten für das mindestens eine Leistungskriterium, wenn beim Betreiben des Prozessors ein zweites der Linderungsschemata verwendet wird.

2. Verfahren nach Anspruch 1, wobei:
das mindestens eine Leistungskriterium aufgrund einer spekulativen Ausführung variiert; und
die Vielzahl von Linderungsschemata mindestens eines von einem Verzögerungsmechanismus, einen Wiederherstellmechanismus oder einen Rückgängig-Mechanismus umfasst.

3. Verfahren nach Anspruch 1 oder Anspruch 2, wobei das Auswählen von einem Compiler erzeugte Hinweise oder von einer vorherigen Ausführung eines Programms gesammelte Daten eines Profilers mit während der Ausführung eines Programms gemessenen Echtzeit-Daten kombiniert.

4. Verfahren nach Anspruch 1, wobei:
das mindestens eine Leistungskriterium auf mindestens einem von Folgenden basiert: Genauigkeit der Verzweigungsvorhersage, einer Cache-Trefferrate für einen Cache des Prozessors oder einer Cache-Fehlerrate für einen Cache des Prozessors.

5. Verfahren nach Anspruch 1, ferner umfassend:
Lindern einer Nebenwirkung eines spekulativen Ausführens mindestens einer Anweisung des Anweisungsstroms unter Verwendung des ausgewählten Linderungsschemas, wobei die Linderung ferner mindestens eines von Folgenden umfasst: Verhindern des Abrufens der spekulativen Operation; Verhindern des Decodierens der spekulativen Operation; Verhindern des Sendens der spekulativen Operation; Verhindern des Ausgebens der spekulativen Operation; Verhindern der Ausführung der spekulativen Operation; Verhindern des Speicherzugriffs der spekulativen Operation; Verhindern des Zurückschreibens in das Register der spekulativen Operation oder Verhindern der Festschreibung der spekulativen Operation.

6. Vorrichtung, die einen Prozessor (115) implementiert, wobei die Vorrichtung umfasst:
Speicher, der zum Speichern von Daten eines Profilers (150) zum Messen mindestens eines Leistungskriteriums für einen von dem Prozessor ausgeführten Anweisungsstrom angeordnet ist; und
Steuerlogik (130, 710), die zu Folgendem konfiguriert ist:
Auswählen basierend auf den gemessenen Leistungskriterien durch
Messen des mindestens einen Leistungskriteriums, wenn beim Betreiben des Prozessors ein erstes der Linderungsschemata verwendet wird;
Messen des mindestens einen Leistungskriteriums, wenn beim Betreiben des Prozessors ein zweites anderes der Linderungsschemata verwendet wird; und
Vergleichen von Messwerten für das mindestens eine Leistungskriterium, wenn beim Betreiben des Prozessors ein erstes der Linderungsschemata verwendet wird, mit Messwerten für das mindestens eine Leistungskriterium, wenn beim Betreiben des Prozessors ein zweites der Linderungsschemata verwendet wird,
eines einer Vielzahl von Linderungsschemata zum Lindern eines Angriffs auf Spekulationsbasis auf die Vorrichtung.

7. Vorrichtung nach Anspruch 6, wobei die Vielzahl von Linderungsschemata mindestens eines von einem Verzögerungsmechanismus, einen Wiederherstellmechanismus oder einen Rückgängig-Mechanismus umfasst.

8. Vorrichtung nach Anspruch 6 oder Anspruch 7, wobei:
das Profiling und das Auswählen dynamisch während eines Laufzeitbetriebs des Prozessors durchgeführt werden, wobei mindestens eines von dem Profiling oder dem Auswählen unter Verwendung eines Hardware-Leistungszählers des Prozessors durchgeführt wird.

9. Vorrichtung nach Anspruch 6 oder Anspruch 7, wobei die Vorrichtung ferner Verzweigungsvorhersage-Hardware (140) umfasst und wobei sich das mindestens eine Leistungskriterium auf die Verzweigungsvorhersage bezieht und das Profiling unter Verwendung von mindestens einer der folgenden Verzweigungsvorhersage-Hardware durchgeführt wird: einem Sättigungszähler, einem Lee-Smith-Zähler, einer Musterverlaufstabelle, einer Verzweigungsverlaufstabelle oder einer globalen Verlaufstabelle mit gemeinsam genutztem Index.

10. Vorrichtung nach Anspruch 6 oder Anspruch 7, ferner umfassend einen Zähler für Verhalten in der Vergangenheit, wobei das mindestens eine Leistungskriterium mit einem Zähler für Verhalten in der Vergangenheit gemessen wird.

11. Vorrichtung nach Anspruch 6 oder Anspruch 7, wobei der Prozessor einen Cache umfasst und wobei das mindestens eine Leistungskriterium auf der Cache-Trefferrate oder der Cache-Fehlerrate für den Cache basiert.

12. Vorrichtung nach Anspruch 6 oder Anspruch 7, wobei die Steuerlogik (710) eine Taint-Matrix (735) umfasst und wobei mindestens eines der Linderungsschemata die Taint-Matrix zum Bestimmen von Abhängigkeiten zum Lindern des Angriffs auf Spekulationsbasis verwendet.

13. Vorrichtung nach Anspruch 6 oder Anspruch 7, wobei die Steuerlogik ferner Folgendes umfasst:
eine Schaltung, die zum Löschen von Taint-Daten in dem Speicher konfiguriert ist, um anzugeben, ob die identifizierte spekulative Operation bereinigt wurde;
eine Ausführungseinheit, die die spekulative Operation durchführt, die die mindestens eine Nebenwirkung verursacht; und
eine Ausführungseinheit, die die abhängige Operation basierend auf den gelöschten Taint-Daten ausführt.

14. Vorrichtung nach Anspruch 6 oder Anspruch 7, wobei
die Steuerlogik (710) eine Taint-Matrix (735) umfasst, die eine bedingte Anweisung angibt, die beim Ausführen den bedingten Zustand einer Spekulationsquellenoperation bereinigt, wobei die Taint-Matrix Daten speichert, die mindestens zwei von der identifizierten spekulativen Operation abhängige Operationen angeben, wobei die Taint-Matrix ferner Daten speichert, die angeben, dass eine spekulative Operation durch das Ausführen einer Speicherladeanweisung verursacht wird und der bedingte Zustand durch das Ausführen einer Verzweigungsanweisung bestimmt wird.

## Revendications

1. Procédé (1000) de fonctionnement d'un processeur, le procédé comprenant :
le profilage (1010) d'un flux d'instructions pour au moins un critère de performances ; et
sur la base des critères de performances, la sélection (1020) d'un schéma d'atténuation parmi une pluralité de schémas d'atténuation pour une attaque fondée sur une spéculation ; le procédé étant **caractérisé en ce que** :
dans lequel la sélection est effectuée par :
la mesure du ou des critères de performances lorsqu'un premier schéma d'atténuation parmi les schémas d'atténuation est utilisé lors du fonctionnement du processeur;
la mesure du ou des critères de performances lorsqu'un second schéma d'atténuation différent est utilisé lors du fonctionnement du processeur ; et
la comparaison des mesures pour le ou les critères de performances lorsqu'un premier schéma d'atténuation parmi les schémas d'atténuation est utilisé lors du fonctionnement du processeur à des mesures pour le ou les critères de performances lorsqu'un second schéma d'atténuation parmi les schémas d'atténuation est utilisé lors du fonctionnement du processeur.

2. Procédé selon la revendication 1, dans lequel :
le ou les critères de performances varient en raison d'une exécution spéculative ; et
la pluralité de schémas d'atténuation comprend au moins un élément parmi un mécanisme de retard, un mécanisme de rétablissement ou un mécanisme d'annulation.

3. Procédé selon la revendication 1 ou la revendication 2, dans lequel la sélection combine des indications générées par des données d'un compilateur ou d'un profileur recueillies lors de l'exécution précédente d'un programme avec des données en temps réel mesurées pendant l'exécution d'un programme.

4. Procédé selon la revendication 1, dans lequel :
le ou les critères de performances sont basés sur au moins l'un des éléments suivants : la précision de la prédiction de branchement, un taux de réussite de cache pour un cache du processeur, ou un taux d'échec de cache pour un cache du processeur.

5. Procédé selon la revendication 1, comprenant en outre :
l'atténuation d'un effet concomitant de l'exécution spéculative d'au moins une instruction du flux d'instructions à l'aide du schéma d'atténuation sélectionné, l'atténuation comprenant en outre au moins l'un des éléments suivants : empêcher la récupération de l'opération spéculative ; empêcher le décodage de l'opération spéculative ; empêcher la distribution de l'opération spéculative ; empêcher la délivrance de l'opération spéculative ; empêcher l'exécution de l'opération spéculative ; empêcher l'accès à la mémoire de l'opération spéculative ; empêcher la réécriture de registre de l'opération spéculative, ou empêcher l'engagement de l'opération spéculative.

6. Appareil mettant en oeuvre un processeur (115), l'appareil comprenant :
une mémoire située pour stocker des données de profileur (150) pour mesurer au moins un critère de performances pour un flux d'instructions exécuté par le processeur ; et
une logique de commande (130, 710) configurée pour :
sur la base des critères de performances mesurés, sélectionner, au moyen de
la mesure du ou des critères de performances lorsqu'un premier schéma d'atténuation parmi les schémas d'atténuation est utilisé lors du fonctionnement du processeur ;
la mesure du ou des critères de performances lorsqu'un second schéma d'atténuation différent est utilisé lors du fonctionnement du processeur ; et
la comparaison des mesures pour le ou les critères de performances lorsqu'un premier schéma d'atténuation parmi les schémas d'atténuation est utilisé lors du fonctionnement du processeur à des mesures pour le ou les critères de performances lorsqu'un second schéma d'atténuation parmi les schémas d'atténuation est utilisé lors du fonctionnement du processeur,
un schéma d'atténuation parmi une pluralité de schémas d'atténuation pour atténuer une attaque fondée sur une spéculation contre l'appareil.

7. Appareil selon la revendication 6, dans lequel la pluralité de schémas d'atténuation comprend au moins un élément parmi un mécanisme de retard, un mécanisme de rétablissement ou un mécanisme d'annulation.

8. Appareil selon la revendication 6 ou la revendication 7, dans lequel :
le profilage et la sélection sont effectués de manière dynamique pendant le fonctionnement de lancement du processeur, au moins un élément parmi le profilage ou la sélection étant effectué à l'aide d'un compteur de performances matérielles du processeur.

9. Appareil selon la revendication 6 ou la revendication 7, l'appareil comprenant en outre un matériel de prédiction de branchement (140), et dans lequel l'au moins un critère de performances concerne la prédiction de branchement, et le profilage est effectué en utilisant au moins l'un des matériels de prédiction de branchement suivants : un compteur de saturation, un compteur Lee-Smith, une table d'historique de modèles, une table d'historique de branchements ou une table d'historique globale avec partage d'index.

10. Appareil selon la revendication 6 ou la revendication 7, comprenant en outre un compteur de comportements passés, dans lequel l'au moins un critère de performances est mesuré avec un compteur de comportements passés.

11. Appareil selon la revendication 6 ou la revendication 7, dans lequel le processeur comprend un cache, et dans lequel l'au moins un critère de performances est basé sur le taux de réussite de cache ou le taux d'échec de cache pour le cache.

12. Appareil selon la revendication 6 ou la revendication 7, dans lequel la logique de commande (710) comprend une matrice d'altération (735), et dans lequel au moins l'un des schémas d'atténuation utilise la matrice d'altération pour déterminer des dépendances afin d'atténuer l'attaque basée sur une spéculation.

13. Appareil selon la revendication 6 ou la revendication 7, dans lequel la logique de commande comprend en outre :
des circuits configurés pour effacer les données d'altération dans la mémoire afin d'indiquer si l'opération spéculative identifiée a été résolue ;
une unité d'exécution qui effectue l'opération spéculative, provoquant l'au moins un effet concomitant ; et
une unité d'exécution qui, sur la base des données d'altération effacées, effectue l'opération dépendante.

14. Appareil selon la revendication 6 ou la revendication 7, dans lequel
la logique de commande (710) comprend une matrice d'altération (735), indiquant une instruction conditionnelle qui, lorsqu'elle est exécutée, résout l'état conditionnel d'une opération source de spéculation, la matrice d'altération stockant des données indiquant au moins deux opérations dépendant de l'opération spéculative identifiée, la matrice d'altération stockant en outre des données indiquant qu'une opération spéculative est provoquée par l'exécution d'une instruction de chargement de mémoire et que l'état conditionnel est déterminé par l'exécution d'une instruction de branchement.
